# EUROPÄISCHE PATENTSCHRIFT

(11) **EP 2 669 400 B1**
(45) Veröffentlichungstag und Bekanntmachung des Hinweises auf die Patenterteilung: **12.10.2016**
(21) Anmeldenummer: 13168661.0
(22) Anmeldetag: 22.05.2013
(51) Int. Cl.: C23C 4/08, C23C 4/12, C23C 24/04, C23C 30/00, F16C 9/04, F16C 33/14, B23K 35/30, C22C 1/02, C22C 9/02, C23C 28/02, F16C 33/12

(54) **Zinkfreies Spritzpulver, kupferhaltige thermische Spritzschicht, sowie Verfahren zur Erzeugung einer kupferartigen thermischen Spritzschicht**
Zinc-free spray powder, copper thermal spray coating, method for creating a copper thermal spray coating
Poudre mouillable sans zinc, couche de diffusion thermique contenant du cuivre, ainsi que procédé de génération d'une couche de diffusion thermique cuivreuse

(30) Priorität: 01.06.2012 EP 12170426
(43) Veröffentlichungstag der Anmeldung: 04.12.2013
(73) Patentinhaber: Oerlikon Metco AG, Wohlen, 5610 Wohlen (CH)
(72) Erfinder: Distler, Bernd, Elmont, NY New York 11003 (US); Ernst, Peter Dr., 8174 Stadel b. Niederglatt (CH)
(74) Vertreter: Intellectual Property Services GmbH

(56) Entgegenhaltungen:
- EP-A2- 0 926 340
- WO-A1-2011/127513
- WO-A1-2012/012818
- DE-A1- 2 258 295
- DE-A1- 4 118 469
- DE-A1-102006 060 474
- DE-A1-102010 022 597
- DE-B3-102007 019 510
- JP-A- 2005 076 075
- US-A1- 2003 049 148
- US-A1- 2006 063 023
- US-B1- 6 416 877

## Beschreibung

Die Erfindung betrifft ein zinkfreies Spritzpulver, eine mit dem Spritzpulver erzeugte kupferhaltige Oberflächenschicht, insbesondere eine Oberflächenschicht auf einem Lagerteil einer Lagervorrichtung, sowie ein Verfahren zum Aufbringen einer solchen Oberflächenschicht gemäss dem Oberbegriff des unabhängigen Anspruchs der jeweiligen Kategorie.

In der US2003049148 A1 wird ein zinkfreies Pulver zum Sintern beschrieben. Das Pulver ist Kupfer-Aluminium basiert und enthalt 1 bis 12 Gewichtsprozent Zinn und 2 bis 14 Gewichtsprozent Aluminium. Die Partikelgrösse beträgt ca. 40 µm.

In der DE 2258295 A1 wird ein Bauteil aus einem Eisenwerkstoff mit einer Auftragsschicht aus einer aufgeschweissten Kupferlegierung mit 85-92 % Kupfergehalt beschrieben. Die Auftragsschicht enthält 3 bis 6 Gewichtsprozent Zinn und 4 bis 9 Gewichtsprozent Aluminium.

Lagervorrichtungen aller Art, z.B. Gleit- und Wälzlager nehmen in der Technik den überwiegenden Anteil von eingesetzten Lagern ein. Unter dem Begriff Lager bzw. Lagervorrichtungen sind im Folgenden alle, die Funktion des Lagers definierenden, z.B. aufeinander abrollenden, bzw. abgleitenden oder ineinander abgestützen Lagerteile zu verstehen, die in lagerndem Kontakt zusammenwirken.

Mit der an den in lagerndem Kontakt zusammenwirkenden Lagerlaufflächen entstehenden Reibung, sind in der Regel Verschleißerscheinungen verbunden, besonders an den Lagerlaufflächen. Gleitlager finden dabei in der Maschinentechnik in einer kaum übersehbaren Anzahl von Ausführungsformen Verwendung. Beispielweise werden in Hubkolbenbrennkraftmaschinen Gleitlager als Kurbelwellenlager, Pleuellager, Drucklager, Kreuzkopfzapfenlager, Propellerwellenlager oder in vielen anderen Anwendungen verwendet.

Aus der WO 00/23718 ist beispielsweise ein Gleitlager sowie ein Verfahren zur Herstellung eines Gleitlagers offenbart, wobei eine aus Weißmetall bestehende Beschichtung an ein aus einem Eisenwerkstoff bestehendes Tragteil anlegiert wird. Die Bildung einer Legierung erfordert jedoch die Anwesenheit flüssiger Legierungskomponenten, so dass beim Beschichtungsvorgang dementsprechend viel Wärme freigesetzt wird, wodurch nicht nur das Weißmetall schmilzt, sondern auch an der laufflächenseitigen Oberseite des Tragteils ein aus geschmolzenem Grundwerkstoff bestehendes Metallbad erzeugt wird. Die so erzeugten Schmelzen von Weißmetall und Eisenwerkstoff können miteinander legieren, wobei in großem Umfang FeSn₂ entsteht. Hierbei entsteht dementsprechend eine vergleichsweise dicke Verbindungszone, die weitgehend aus FeSn₂ besteht. Diese Verbindungszone ergibt zwar eine gute metallurgische Verbindung zwischen dem Grundwerkstoff und der Beschichtung, jedoch stellt FeSn₂ ein sehr sprödes Material dar, so dass es bereits bei geringeren Belastungen der bekannten Lageranordnung zur Bildung von Rissen und zu Sprödbruch kommen kann. Hinzu kommt, dass im Falle einer ungünstigen Abkühlung eine Umwandlung des beschichtungsnahen Eisenwerkstoffs zu Martensit stattfinden kann, der ebenfalls sehr spröde ist, wodurch der vorstehend genannte Nachteil noch verstärkt wird.

Die Folge ist, dass sich bei einem Lager der zuvor beschriebenen Art infolge der hohen Sprödigkeit und geringen Streckfähigkeit innerhalb eines vergleichsweise dicken Zwischenbereichs zwischen dem Stahl des Grundwerkstoffs und der Weissmetall Lagerschicht eine entsprechend kurze Lebensdauer ergibt.

Um dies zu vermeiden ist es auch bekannt, eine aus Lagermetall wie Weißmetall bestehende Beschichtung im Schleudergußverfahren auf das Tragteil aufzubringen. Dabei unterbleibt zwar die Bildung eines aus geschmolzenem Grundwerkstoff bestehenden Metallbads. Bei der Erstarrung des im Schleudergussverfahren aufgebrachten Weißmetalls kann es jedoch zu einer Trennung der Legierungskomponenten kommen, indem zunächst aus Cu₆Sn₅ bestehende, nadelförmige Kristalle und dann aus SbSn bestehende kubische Kristalle ausfallen und schließlich die verbleibende zinnreiche Matrix erstarrt.

Die Dichte von Cu₆Sn₅ ist größer, diejenige von SbSn kleiner als die Dichte der länger flüssigen Matrix. Die Cu₆Sn₅ -Kristalle wandern dementsprechend radial nach außen und schwächen dabei den Bereich, mit dem die Weißmetall-Beschichtung an den Grundwerkstoff anschließt, was sich ebenfalls ungünstig auf die Lebensdauer auswirken kann.

Zur Vermeidung dieser und verwandter Probleme wird in der WO 2007/131 742 A1 ein Gleitlager und ein Verfahren zur Herstellung eines Gleitlagers vorgeschlagen, bei welchem zwischen der reinen Weissmetallschicht und dem eisenhaltigen Grundwerkstoff eine relativ dünne FeSn₂ enthaltende Verbindungszone ausgebildet wird, die höchstens 10µm dick ist.

Diese Lösung stellt jedoch lediglich einen Kompromiss dar, da die FeSn₂ Schicht zwar relativ dünn ist, aber eben immer noch vorhanden ist, so dass das Problem des Sprödbruchs und der Rissbildung immer noch nicht abschliessend gelöst ist. Insbesondere für Gleitlager, die enorm hohen Belastungen ausgesetzt sind, wie zum Beispiel Kurbelwellenlager von Verbrennungsmotoren, besteht das Problem des Sprödbruchs und der Rissbildung weiter fort, weil die Verformungsfähigkeit der Gleitlager gemäss WO 2007/131 742 A1 bei weitem noch nicht ausreichend ist.

Um diese Probleme grundsätzlich zu vermeiden und im Fall eines Verschleisses der Lagerflächen den Austausch des kompletten Lagers zu verhindern, werden unter anderem bei Gleitlagern auch Lagerschalen verwendet, die in das Lager eingesetzt und die die nach ihrer Abnutzung ausgetauscht werden können, d.h., es werden sogenannte geteilte Gleitlager mit Lagerschalen verwendet. Teilweise findet auch die kombinierte Lagerung in Gleit- und Wälzlagern Anwendung. Die Wellen sind dabei in der Regel aus geschmiedeten Stählen oder Gusseisen mit Kugelgraphit, die Gegenparte aus Vergütungsstählen geschmiedet, oder gesintert oder zum Teil auch aus Temperguss hergestellt. Die Lagerschalen sind meistens als sogenannte Zwei- oder Dreischichtlager realisiert.

Dadurch wird allerdings der konstruktive Aufbau des Gleitlagers wesentlich verkompliziert und mit dem Auswechseln der Lagerschalen wird außerdem ein kostenintensiver Wartungsprozeß nötig. Zudem ist die Herstellung solcher Lagerschalen relativ aufwendig. Bei hohen Laufleistungen der Maschine nutzen sich die Lagerschalen zudem vorzeitig soweit ab, daß das Wechseln der Lagerschalen nötig wird, wobei das Wechseln der Lagerschalen in solchen Maschinen, wie oben schon erwähnt wurde, mit hohen Kosten verbunden ist.

Aber auch bei anderen Arten von Lagern, z.B. bei Kugellagern ist der vorzeitige Verschleiss der Lagerteile, also zum Beispiel der Kugeln des Kugellagers, einer durch das Kugellager zu lagernde Achse, ein Käfig für die Kugeln des Kugellagers, oder anderer Lagerteile des Kugellagers ein prinzipielles Problem, das erheblichen Aufwand für Reparaturen und Wartung nach sich zieht und letztlich mit erheblichen Kosten verbunden ist.

Zur Lösung dieser und weiterer Probleme wurde daher in der EP 1 637 623 B1 ein Spritzpulver zur Herstellung einer Lagerschicht auf einem Lagerteil mittels eines thermischen Beschichtungsverfahrens vorgeschlagen, welches Spritzpulver bis zu 30% Zink, bis zu 10% Zinn, bis zu 3% Silizium, bis zu 7% Aluminium, bis zu 2% Eisen, bis zu 4%, bis zu 3% Kobalt enthält, wobei die zu 100% verbleibende Differenz Kupfer ist. Alle Angaben sind dabei Gewichts-Prozent.

Durch die EP 1 637 623 B1 wird somit ein Spritzpulver bereitgestellt, mit welchem mittels eines thermischen Beschichtungsverfahrens eine kupferhaltige Oberflächenschicht auf ein Lagerteil aufbringbar ist, so dass die Probleme mit den Weissmetallbeschichtungen, die zum Beispiel mittels Schleuderguss aufgebracht werden, ebenso vermieden werden, wie die Probleme mit den aufwändigen geteilten Lagern mit Lagerschalen.

Die entscheidenden Bestandteile des Spritzpulvers gemäss EP 1 637 623 B1 sind dabei einerseits Eisen Kobalt, Mangan und Silizium, die in der gespritzten Schicht beim Abkühlen in Form von einer Hartphase als intermetallische Phasen bzw. Verbindungen ausscheiden, so dass in der Schicht isolierte Bereiche entstehen, die räumlich isolierte Hartphasen aus intermetallischen Phasen bzw. intermetallischen Verbindungen aus Eisen Kobalt, Mangan und Silizium bilden. Die Hartphasen bilden relativ harte Bereiche, das heisst Bereiche mit hoher Härte, in der ansonsten verhältnismässig weichen kupferhaltigen Grundmatrix, die im wesentlichen aus Kupfer, Aluminium und Zink aufgebaut ist und so eine Kupfer-Aluminium Zink-Grundmatrix ausbilden, die im Verhältnis zu den eingeschlossenen Bereichen der Hartphasen, eine weiche kupferhaltige Grundmatrix bilden.

Obwohl die aus dem Spritzpulver gemäss EP 1 637 623 B1 gebildeten Lagerschichten im Betrieb hervorragende mechanische Eigenschaften bewiesen haben, hat sich allerdings leider gezeigt, dass zumindest für bestimmte Anwendungen der Zinkanteil dazu führen kann, dass Zinkabrieb in das die Lager schmierende Schmieröl gelangen kann, was sich unter Umständen, abhängig von der chemischen Zusammensetzung des verwendeten Schmieröls, zu einer Art von Zink-Vergiftung des Schmieröls führen kann, also dessen Eigenschaften negativ beeinflussen kann. Ausserdem ist die Herstellung des Spritzpulvers gemäss EP 1 637 623 B1 aufgrund seiner relativ komplizierten chemischen Zusammensetzung einigermassen aufwändig und damit teuer.

Die Aufgabe der Erfindung ist es daher, die Gleiteigenschaften einer Oberfläche eines Lagerteils durch Aufbringen einer thermischen Spritzschicht zu verbessern, und so eine verbesserte und konstruktiv einfachere Lagervorrichtung vorzuschlagen, die insbesondere auch die aus dem Stand der Technik bekannten Probleme mit dem Zinkabrieb vermeidet. Dementsprechend ist es eine weitere Aufgabe der Erfindung, ein chemisch möglichst einfach zusammengesetztes thermisches Spritzpulver bereitzustellen, mit welchem eine solche Lagerschicht auf einem Lagerteil herstellbar ist.

Die diese Aufgaben lösenden Gegenstände der Erfindung sind durch die Merkmale des unabhängigen Anspruchs der jeweiligen Kategorie gekennzeichnet.

Die jeweiligen abhängigen Ansprüche beziehen sich auf besonders vorteilhafte Ausführungsformen der Erfindung.

Die Erfindung betrifft somit ein zinkfreies Spritzpulver zum thermischen Beschichten eines Substrats, insbesondere zum thermischen Beschichten eines Lagerteils einer Lagervorrichtung, welches Spritzpulver bis auf unvermeidbare Verunreinigungen die folgende Zusammensetzung aufweist: Zinn = 15% bis 25% Gewichts-Prozent, Aluminium = 0.1% bis 5% Gewichts-Prozent, Eisen höchstens 1% Gewichts-Prozent, und Kupfer = Differenz auf 100% Gewichts-Prozent.

Ein zweites wesentliches Merkmal des erfindungsgemässen Spritzpulver ist der relativ hohe Zinngehalt

Erfindungsgemäss wird somit ein Spritzpulver bereitgestellt, mit welchem mittels eines thermischen Beschichtungsverfahrens eine kupferhaltige Oberflächenschicht auf ein Substrat aufbringbar ist.

Entscheidend ist dabei einerseits, dass das erfindungsgemässe Spritzpulver kein Zink enthält, so dass die aus dem Stand der Technik bekannten schädlichen Wirkungen von zinkhaltigen Oberflächenschichten vermieden werden. Insbesondere kann damit die durch Zinkabrieb verursachte Zink-Vergiftung des Schmieröls gar nicht erst auftreten, die wie eingangs erwähnt zum Beispiel durch zinkhaltige Oberflächenschichten von ölgeschmierten Lagerteilen häufig verursacht wird.

Ein zweites wichtiges Merkmal ist ein Zinngehalt von 15% bis 25% Gewichtsprozent in Verbindung mit einem relativ kleinen Anteil an Aluminium, der zwischen 0.1% bis höchstens 5% Gewichtsprozent liegt.

Es ist dabei im Prinzip bekannt, dass Aluminium einerseits einen starken positiven Einfluss auf die mechanischen Eigenschaften haben kann und insbesondere die Korrosionsbeständigkeit einer thermischen Spritzschicht bedeutend verbessern kann. Daher ist man im Stand der Technik bisher davon ausgegangen, dass ein relativ hoher Aluminiumgehalt notwendig ist um eine gute Korrosionsbeständigkeit der thermischen Spritzschicht garantieren zu können. Allerdings hat sich anderseits aber auch gezeigt, dass ein hoher Anteil von Aluminium im thermischen Spritzpulver beim thermischen Spritzen dazu führt, dass sich in erhöhtem Masse Aluminiumoxid (vorwiegend Al₂O₃) in der thermischen Spritzschicht ausbildet, was die Reibungseigenschaften der thermischen Spritzschicht wiederum negativ beeinflusst.

Eine weitere Erkenntnis der Erfindung besteht darin, dass sich bei einem hohen Aluminiumgehalt im Spritzpulver eine Aluminiummatrix in der thermischen Spritzschicht ausbilden kann, in der mehr oder weniger isolierte Zinnphase verteilt sein können. Durch die relativ hohen Abkühlungs- und Verfestigungsraten beim thermischen Spritzen kann ein Teil des Zinns in einer gesättigten Lösung in der Aluminiummatrix ausgeschieden werden. Der Rest des Zinns ist dann in Form von Partikeln von unterkritischer Grösse, also in Form von Partikeln, die eine zu geringe Grösse haben in der Aluminiummatrix ausgebildet, so dass die sogenannten Anti-scuffing Eigenschaften der Schicht negativ beeinflusst werden, was bedeutet, dass die gegeneinander reibenden Gleitpartner, beispielweise die Gleitpartner eines Lagers, verstärkt zum Fressen (scuffing) neigen, was natürlich aus naheliegenden Gründen unbedingt verhindert werden muss.

Anderseits kann ein hoher Zinnanteil die Anti-scuffing Eigenschaften der thermischen Spritzschicht bedeutend verbessern, so dass durch das erfindungsgemässe Spritzpulver letztlich eine thermische Spritzschicht ermöglicht, die alle wesentlichen Eigenschaften einer thermisch gespritzten Oberflächenschicht, insbesondere einer thermisch gespritzten Lagerschicht gleichzeitig optimiert. Dabei darf der Zinnanteil allerdings eine vorgebbare Grenze nicht überschreiten, da die thermische Spritzschicht sonst mechanisch zu schnell verschleisst.

D.h., die erfindungsgemässe Kombination eines relativ niedrigen Aluminiumgehalts zwischen 0.1% und höchstens 5% Gewichtsprozent mit einem Zinngehalt von mindestens 15% bis maximal 25% Gewichtsprozent führt zu einem thermischen Spritzpulver mit welchem thermische Spritzschichten herstellbar sind, die erstmals sowohl die Anti-scuffing Eigenschaften der thermischen Spritzschicht, als auch die Korrosionsbeständigkeit, sowie die Reibeigenschaften, also einen möglichst kleinen Reibungskoeffizient der thermischen Spritzschicht gleichzeitig optimieren. Eine der wesentlichen Erkenntnisse der Erfindung ist dabei, dass in der Zusammensetzung des erfindungsgemässen Spritzpulvers bereits ein relativ kleiner Anteil von 0.1 % bis 5% Gewichtsprozent an Aluminium ausreicht, um einerseits eine ausreichende Korrosionsbeständigkeit der thermischen Spritzschicht zu garantieren, wobei gleichzeitig die Ausbildung von unerwünschtem Aluminiumoxid (vorwiegend Al₂O₃) auf ein ausreichend niedriges Mass unterdrückt wird.

Bei einem bevorzugten Ausführungsbeispiel eines erfindungsgemäss Spritzpulvers enthält das Spritzpulver bevorzugt 20% Gewichtsprozent Zinn.

Dabei kann das Spritzpulver im Speziellen zwischen 0.5% und 2% Gewichtsprozent Aluminium, bevorzugt 1% Gewichtsprozent Aluminium enthalten, und / oder höchstens 0.5% Gewichtsprozent Eisen, bevorzugt höchstens 0.2% Gewichtsprozent Eisen enthalten. Eisen kann dabei in einem speziellen Ausführungsbeispiel bis auf marginale, nicht vermeidbare Mengen auch ganz fehlen.

In der Praxis liegt die Grösse der Partikel des Spritzpulvers zwischen 5µm und 120µm, vorzugsweise zwischen 10µm und 60µm, und kann je nach Anwendung auch z.B. zwischen 60 µm und120 µm liegen.

Dabei kann ein erfindungsgemässes Spritzpulver in an sich bekannter Weise beispielweise durch Gasverdüsen, Wasserverdüsen, Sintern, Sprühtrocknen, mechanisches Legieren, oder in einer an anderen geeigneten Weise hergestellt werden.

Die Erfindung betrifft weiter ein durch thermisches Spritzen aufgebrachtes zinkfreies Schichtsystem. Das Schichtsystem umfasst dabei mindestens eine Oberflächenschicht, insbesondere eine Lagerschicht eines Lagerteils einer Lagervorrichtung, welche Oberflächenschicht bis auf unvermeidbare Verunreinigungen die folgende Zusammensetzung aufweist: Zinn = 15% bis 25% Gewichts-Prozent, Aluminium = 0.1% bis 5% Gewichts-Prozent, Eisen höchstens 1% Gewichts-Prozent, und Kupfer = Differenz auf 100% Gewichts-Prozent.

Die Oberflächenschicht eines erfindungsgemässen Schichtsystems kann dabei bevorzugt 20% Gewichtsprozent Zinn enthalten, und / oder die Oberflächenschicht kann zwischen 0.5% und 2% Gewichtsprozent Aluminium, bevorzugt 1 % Gewichtsprozent Aluminium enthalten, und / oder die Oberflächenschicht enthält höchstens 0.5% Gewichtsprozent Eisen, bevorzugt höchstens 0.2% Gewichtsprozent Eisen. Im Speziellen kann Eisen bis auf unvermeidbare Verunreinigungen auch ganz fehlen. Im Übrigen können auch z.B. unvermeidbare Mengen verschiedener Oxide oder unvermeidbare Reste von Prozessgasen, wie beispielweise Edelgase, Stickstoff usw. in einem erfindungsgemässen Schichtsystem vorhanden sein, die z.B. durch den thermischen Spritzvorgang an sich entstehen können, wobei die Oberflächenschicht z.B. eine Porosität von 0.5% bis 5% Volumen-Prozent, insbesondere zwischen 1% und 3% aufweisen kann.

In einem für die Praxis wichtigen Ausführungsbeispiel kann ein erfindungsgemässes Schichtsystem zusätzlich eine zinnhaltige äussere Deckschicht umfassen, die bevorzugt direkt auf der zinkfreien Oberflächenschicht aus dem erfindungsgemässen Spritzpulver vorgesehen sein kann, wobei die äussere Deckschicht in einem besonders wichtigen Ausführungsbeispiel bis auf unvermeidbare Verunreinigungen nur Zinn enthält. Die äussere Deckschicht kann dabei im Speziellen eine Einlaufschicht mit an sich bekannter Funktion sein, die sich zumindest teilweise beim Einlaufvorgang in der Art verändern bzw. verschleissen kann, dass zum Beispiel die Gegenparte eines Lagers nach einer Einlaufzeit geometrisch bzw. in Bezug auf Reibung optimal aufeinander abgestimmt bzw. eingefahren sind.

Schliesslich betrifft die Erfindung auch ein Werkstück, insbesondere ein Pleuel für eine Hubkolbenbrennkraftmaschine, mit einem oben näher beschriebenen Schichtsystem, sowie ein Spritzverfahren zum Herstellen eines erfindungsgemässen Schichtsystems auf einem Werkstück unter Verwendung eines Spritzpulvers der Erfindung, insbesondere zum Herstellen einer Oberflächenschicht auf einem Lagerteil eines Lagers, wobei das Spritzverfahren ein thermisches Spritzverfahren, insbesondere ein atmosphärisches Plasmaspritzverfahren, ein Vakuumplasmaspritzverfahren, ein HVOF-Verfahren, ein Flammspritzverfahren oder ein Kaltgasspritzverfahren ist.

## Patentansprüche

1. Zinkfreies Spritzpulver zum thermischen Beschichten eines Substrats, insbesondere zum thermischen Beschichten eines Lagerteils einer Lagervorrichtung, welches Spritzpulver bis auf unvermeidbare Verunreinigungen die folgende Zusammensetzung aufweist:
Zinn = 15% bis 25% Gewichts-Prozent;
Aluminium = 0.1% bis 5% Gewichts-Prozent;
Eisen höchstens 1% Gewichts-Prozent;
Kupfer = Differenz auf 100% Gewichts-Prozent.

2. Spritzpulver nach Anspruch 1, wobei das Spritzpulver 20% Gewichtsprozent Zinn enthält.

3. Spritzpulver nach einem der Ansprüche 1 oder 2, wobei das Spritzpulver zwischen 0.5% und 2% Gewichtsprozent Aluminium, bevorzugt 1% Gewichtsprozent Aluminium enthält.

4. Spritzpulver nach einem der vorangehenden Ansprüche, wobei das Spritzpulver höchstens 0.5% Gewichtsprozent Eisen, bevorzugt höchstens 0.2% Gewichtsprozent Eisen enthält.

5. Spritzpulver nach einem der vorangehenden Ansprüche, wobei die Grösse der Partikel des Spritzpulvers zwischen 5µm und 120µm, vorzugsweise zwischen 10µm und 60µm liegt.

6. Spritzpulver nach einem der vorangehenden Ansprüche, wobei das Spritzpulver durch Gasverdüsen, Wasserverdüsen, Sintern, Sprühtrocknen oder mechanisches Legieren hergestellt ist.

7. Durch thermisches Spritzen aufgebrachtes zinkfreies Schichtsystem, umfassend eine Oberflächenschicht, insbesondere eine Lagerschicht eines Lagerteils einer Lagervorrichtung, welche Oberflächenschicht bis auf unvermeidbare Verunreinigungen die folgende Zusammensetzung aufweist:
Zinn = 15% bis 25% Gewichts-Prozent;
Aluminium = 0.1% bis 5% Gewichts-Prozent;
Eisen höchstens 1% Gewichts-Prozent;
Kupfer = Differenz auf 100% Gewichts-Prozent.

8. Schichtsystem nach Anspruch 7, wobei die Oberflächenschicht 20% Gewichtsprozent Zinn enthält.

9. Schichtsystem nach einem der Ansprüche 7 oder 8, wobei die Oberflächenschicht zwischen 0.5% und 2% Gewichtsprozent Aluminium, bevorzugt 1% Gewichtsprozent Aluminium enthält.

10. Schichtsystem nach einem der Ansprüche 7 bis 9, wobei die Oberflächenschicht höchstens 0.5% Gewichtsprozent Eisen, bevorzugt höchstens 0.2% Gewichtsprozent Eisen enthält.

11. Schichtsystem nach einem der Ansprüche 7 bis 10, wobei die Oberflächenschicht eine Porosität von 0.5% bis 5% Volumen-Prozent, insbesondere zwischen 1% und 3% aufweist.

12. Schichtsystem nach einem der Ansprüche 7 bis 11, wobei eine zinnhaltige äussere Deckschicht vorgesehen ist.

13. Schichtsystem nach Anspruch 12, wobei die äussere Deckschicht bis auf unvermeidbare Verunreinigungen nur Zinn enthält.

14. Werkstück, insbesondere Pleuel für eine Hubkolbenbrennkraftmaschine, mit einem Schichtsystem nach einem der Ansprüche 7 bis 13.

15. Spritzverfahren zum Herstellen eines Schichtsystems nach einem der Ansprüche 7 bis 13 auf einem Werkstück nach Anspruch 14 unter Verwendung eines Spritzpulvers nach einem der Ansprüche 1 bis 6, insbesondere zum Herstellen einer Oberflächenschicht auf einem Lagerteil eines Lagers, wobei das Spritzverfahren ein thermisches Spritzverfahren, insbesondere ein atmosphärisches Plasmaspritzverfahren, ein Vakuumplasmaspritzverfahren, ein HVOF-Verfahren, ein Flammspritzverfahren oder ein Kaltgasspritzverfahren ist.

## Claims

1. A zinc-free spray powder for thermally coating a substrate, in particular for thermally coating a bearing part of a bearing apparatus, which spray powder has the following composition except for unavoidable contaminants:
Tin = 15% to 25% weight percent;
Aluminum = 0.1% to 5% weight percent;
Iron = at most 1% weight percent;
Copper - difference to 100% weight percent.

2. A spray powder in accordance with claim 1, wherein the spray powder includes a tin content of 20% weight percent tin.

3. A spray powder in accordance with claim 1 or claim 2, wherein the spray powder includes an aluminum content of between 0.5% and 2% weight percent, preferably of 1% weight percent aluminum.

4. A spray powder in accordance with any one of the preceding claims, wherein the spray powder includes at most an iron content of 0.5% weight percent, preferably of at most 0.2% weight percent iron.

5. A spray powder in accordance with any one of the preceding claims, wherein the size of the particles of the spray powder lies between 5µm and 120µm, preferably between 10µm and 60µm.

6. A spray powder in accordance with any one of the preceding claims, wherein the spray powder is manufactured via gas atomization, water atomization, sintering, spray drying, or mechanical alloying.

7. A zinc-free layer system applied via thermal spray, having a surface layer, in particular a bearing layer of a bearing part in a bearing apparatus, having the following composition except for unavoidable contaminants:
Tin = 15% to 25% weight percent;
Aluminum = 0.1% to 5% weight percent;
Iron = at most 1% weight percent;
Copper = difference to 100% weight percent.

8. A layer system in accordance with claim 7, wherein the surface layer includes a tin content of 20% weight percent tin.

9. A layer system in accordance with claim 7 or claim 8, wherein the surface layer includes an aluminum content of between 0.5% and 2% weight percent, preferably of 1% weight percent of aluminum.

10. A layer system in accordance with any one of the claims 7 to 9, wherein the surface layer includes at most an iron content of 0.5% weight percent, preferably with at most 0.2% weight percent iron.

11. A layer system in accordance with any one of the claims 7 to 10, wherein the surface layer has a porosity of between 0.5% to 5% volume percent, in particular of between 1% and 3%.

12. A layer system in accordance with any one of the claims 7 to 11, wherein an outer top layer including tin is provided.

13. A layer system in accordance with claim 12, wherein the outer top layer only includes tin except for unavoidable contaminants.

14. A work piece having a layer system in accordance with any one of the claims 7 to 13, in particular a connecting rod for a reciprocating piston internal combustion engine.

15. A spray method for manufacturing a layer system in accordance with any one of the claims 7 to 13, on a work piece in accordance with claim 14, on the use of a spray powder in accordance with any one of the claims 1 to 6, in particular for manufacturing a surface layer on a bearing part of a bearing apparatus, wherein the spray method is a thermal spray process, in particular an atmospheric plasma spray method, a vacuum plasma spray method, a HVOF spray process, a flame spray method, or a cold gas spray method.

## Revendications

1. Poudre sans zinc pour application par pulvérisation, pour le revêtement thermique d'un subjectile, en particulier pour le revêtement thermique d'une pièce de palier d'un dispositif de palier, laquelle poudre pour application par pulvérisation présente, jusqu'aux impuretés inévitables, la composition suivante :
Etain = 15 % à 25 %, en pourcents en poids;
Aluminium = 0,1 % à 5 %, en pourcents en poids ;
Fer au plus 1 %, en pourcents en poids ;
Cuivre = complément à 100 %, en pourcents en poids.

2. Poudre pour application par pulvérisation selon la revendication 1, la poudre pour application par pulvérisation contenant 20 %, en pourcents en poids, d'étain.

3. Poudre pour application par pulvérisation selon l'une des revendications 1 ou 2, la poudre pour application par pulvérisation contenant de 0,5 % à 2 %, en pourcents en poids, d'aluminium, de préférence 1 %, en pourcent en poids, d'aluminium.

4. Poudre pour application par pulvérisation selon l'une des revendications précédentes, la poudre pour application par pulvérisation contenant au plus 0,5 %, en pourcent en poids, de fer, de préférence au plus 0,2 %, en pourcent en poids, de fer.

5. Poudre pour application par pulvérisation selon l'une des revendications précédentes, dans laquelle la granulométrie des particules de la poudre pour application par pulvérisation est comprise entre 5 µm et 120 µm, de préférence entre 10 µm et 60 µm.

6. Poudre pour application par pulvérisation selon l'une des revendications précédentes, la poudre pour application par pulvérisation étant fabriquée par atomisation en phase gazeuse, atomisation en phase aqueuse, frittage, séchage par atomisation ou alliage mécanique.

7. Système de couches sans zinc, appliqué par pulvérisation thermique, comprenant une couche superficielle, en particulier une couche de palier d'une pièce de palier d'un dispositif de palier, laquelle couche superficielle présente, jusqu'aux impuretés inévitables, la composition suivante :
Etain = 15 % à 25 %, en pourcents en poids ;
Aluminium = 0,1 % à 5 %, en pourcents en poids ;
Fer au plus 1 %, en pourcents en poids ;
Cuivre = complément à 100 %, en pourcents en poids.

8. Système de couches selon la revendication 7, dans lequel la couche superficielle contient 20 %, en pourcents en poids, d'étain.

9. Système de couches selon l'une des revendications 7 ou 8, dans lequel la couche superficielle contient de 0,5 % à 2 %, en pourcents en poids, d'aluminium, de préférence 1 %, en pourcent en poids, d'aluminium.

10. Système de couches selon l'une des revendications 7 à 9, dans lequel la couche superficielle contient au plus 0,5 %, en pourcent en poids, de fer, de préférence au plus 0,2 %, en pourcent en poids, de fer.

11. Système de couches selon l'une des revendications 7 à 10, dans lequel la couche superficielle présente une porosité de 0,5 % à 5 %, en pourcents en volume, en particulier de 1 % à 3 %.

12. Système de couches selon l'une des revendications 7 à 11, dans lequel il est prévu une couche de couverture extérieure contenant de l'étain.

13. Système de couches selon la revendication 12, dans lequel la couche de couverture extérieure ne contient, jusqu'aux impuretés inévitables, que de l'étain.

14. Pièce en oeuvre, en particulier bielle pour un moteur alternatif à combustion interne, comprenant un système de couches selon l'une des revendications 7 à 13.

15. Procédé de pulvérisation pour fabriquer un système de couches selon l'une des revendications 7 à 13 sur une pièce en oeuvre selon la revendication 14 par utilisation d'une poudre pour application par pulvérisation selon l'une des revendications 1 à 6, en particulier pour fabriquer une couche superficielle sur une pièce de palier d'un palier, le procédé de pulvérisation étant un procédé de pulvérisation thermique, en particulier un procédé de pulvérisation plasma atmosphérique, un procédé de pulvérisation plasma sous vide, un procédé HVOF, un procédé de pulvérisation à la flamme ou un procédé de pulvérisation par gaz froid.
